# EUROPEAN PATENT APPLICATION

(11) **EP 1 623 886 A2**
(43) Date of publication of application: **08.02.2006**
(21) Application number: 05016430.0
(22) Date of filing: 28.07.2005
(51) Int. Cl.: B60R 21/20, B60Q 5/00

(54) **Horn switch gear, airbag system, steering wheel and steering device**

(30) Priority: 05.08.2004 JP 2004229729; 10.12.2004 JP 2004358575; 19.01.2005 JP 2005011776; 19.05.2005 JP 2005146871
(71) Applicant: TAKATA CORPORATION, Minato-ku, Tokyo 106-8510 (JP)
(72) Inventor: Tsujimoto, Kei, Tokyo 106-8510 (JP); Matsui, Yoshitaka, Tokyo 106-8510 (JP); Nakazawa, Wataru, Tokyo 106-8510 (JP); Kaifuki, Masahiko, Aki-gun Hiroshima (JP)
(74) Representative: Banzer, Hans-Jörg

(57) **Abstract**

To provide a horn switch gear in which the contacts can easily be located to each other, so that the assembly to an airbag system is easy, a noncontact sensor (60) that may include a Hall IC is fixed to the lower surface of an overhang (45) mounted to a module cover (40). A magnet (61) is mounted on the upper surface of an extension (16), at the position facing the overhang (45). When the module cover (40) is depressed, the overhang (45) is moved downward together with the module cover (40) to bring the sensor (60) close to the magnet (61). When the distance between the sensor (60) and the magnet 61 becomes shorter than a specified value, a voltage higher than a threshold is generated in the Hall IC due to the magnetic flux from the magnet (61) to cause the noncontact sensor (60) to generate a horn blowing signal, thus blowing the horn.

## Description

### [Technical Field]

The present invention relates to a horn switch, and in particular, it relates to a horn switch gear provided in an airbag system and constructed such that, when depressed, the module cover or the entire airbag system is moved backward to turn on the horn switch. The invention also relates to an airbag system including the horn switch gear. Further, the present invention relates to a construction technique for a horn switch gear mounted to a steering wheel for vehicles.

### [Background Art]

Driver-seat airbag systems to be mounted to car steering wheels are disclosed in which when the module covers of the airbag systems are depressed, horn switches are turned on to blow horns. Japanese Unexamined Patent Application Publication No. 10-100832 and Japanese Unexamined Patent Application Publication No. 2001-114057 describe an airbag system in which when the airbag system is depressed, the module cover is moved backward to turn on the horn switch.

### [Disclosure of the Invention]

### [Problem to be Solved by the Invention]

In the related-art horn switch gears, one of contacts such as contact rivets is mounted to the module cover, and the other is mounted to the retainer. When the contacts are disposed separately, it is difficult to position them with high accuracy.

Accordingly, it is an object of the present invention to provide a horn switch gear that use no contact such as a contact rivet to facilitate the assembly of an airbag system, and an airbag system and a steering wheel including the horn switch gear.

Further, the present invention has as an object the provision of a technique advantageous in improving horn operability in a horn switch gear mounted on a steering wheel for vehicles.

### [Means for Solving the Problem]

These objects are achieved by a horn switch gear according to claim 1. The dependent claims define preferred and advantageous embodiments of the invention.

A horn switch gear according to the present invention includes a backward moving body that is moved backward by the depression by an occupant; an unmoving body that faces the backward moving body; a biasing member interposed between the backward moving body and the unmoving body and biases the backward moving body in the restoring direction; and signal generation means that generates a horn blowing signal by the forward and backward movement of the backward moving body. The signal generation means includes a noncontact sensor.

According to a further embodiment, the noncontact sensor of the horn switch gear includes a Hall IC.

According to an embodiment, the horn switch gear is provided on a steering wheel for vehicles. A second component as the backward moving body that is biased so as to be separated by a specified distance from a first component on the steering-wheel side as the moving body is moved to an operating position by depression against the biasing force to blow a horn, and the operation of the horn is cancelled by releasing the depression. The second component may be a depression member that is typically biased elastically toward the initial position by elastic biasing means such as a coil spring and depressed by an occupant toward the operating position against the elastic biasing force at the operation of the horn. The position in which the second component is separated a specified distance from the first component is defined as the initial position when the second component is not depressed by the occupant. On the other hand, when the depression of the second component is released by the occupant to move the second component from the operating position to the initial position, the operation of the horn is cancelled. Here the distance from the initial position to the operating position is the operation stroke of the second component at the operation of the horn.

Here the term "first component" typically includes the steering wheel itself and members provided on the steering wheel side. The term "second component" typically includes a module cover (module pad) that covers the airbag of the steering wheel from the occupant side, a horn operating cover that is used only to activate the horn, and a horn operating button (switch).

The horn switch gear according to this embodiment includes at least a magnet and a magnetic coil. The magnet and the magnetic coil have a structure in which they move relatively in the direction in which they come close to each other or in the direction in which they separate from each other when the second component moves toward the operating position while moving relative to the first component. The structure includes a structure in which a moving-side magnetic coil moves relative to a fixed-side magnet, a structure in which a moving-side magnet moves relative to a fixed-side magnetic coil, and a structure in which both of the magnet and the magnetic coil move. When the second component moves toward the operating position, the magnet and the magnetic coil move relatively to generate an induced current in the magnetic coil, thereby operating the horn by the generation of the induced current. Typically, the horn is activated since the horn switch senses the induced current generated in the magnetic coil by the relative movement of the magnet and the magnetic coil. This structure uses a so-called "the principle of electromagnetic induction." According to the embodiment, the magnetic force (magnetic flux density) of the magnet, the diameter and the number of windings of the magnetic coil, the pressure required for the occupant to depress the second component to the operating position to activate the horn (for example, the elastic biasing force of the coil spring to elastically bias the second component to the initial position), the operation stroke of the second component, and so forth are set as appropriate so that the magnetic coil can pass a current higher than a specified induced current at the depression of the second component.

The use of the horn switch gear according to this embodiment allows a current higher than a specific induced current to flow in the magnetic coil while reducing the pressure and operation stroke required to depress the second component by adjusting the magnetic force (magnetic flux density) of the magnet, and the diameter and the number of windings of the magnetic coil. Also, the horn operability of the horn switch gear can be improved by reducing the pressure and operation stroke required to depress the second component. The reduction of the operation stroke of the second component can minimize the gap (or clearance) formed between the moving-side second component and the fixed-side component disposed close to the second component, enhancing the appearance.

The horn switch gear according to this embodiment has only to have a structure in which the magnet and the magnetic coil move relatively with the depression of the second component and the mounting positions of the magnet and the magnetic coil are not limited. The embodiment includes a structure in which the first component has a magnet and the second component has a magnetic coil, a structure in which the first component has a magnetic coil and the second component has a magnet, and a structure in which the first component or the second component has both a magnet and a magnetic coil.

In the horn switch gear according to this embodiment, the relative movement of the magnet and the magnetic coil may use the relative movement of the first component and the second component directly or indirectly. A concrete example of the direct use of the relative movement of the first component and the second component includes a structure in which the first component has a magnetic coil, the second component has a magnet, and the magnet moves directly relative to the magnetic coil as with the movement of the second component relative to the first component. On the other hand, a concrete example of the indirect use of the relative movement of the first component and the second component includes a structure in which a member that is operatively connected to the first component has a magnetic coil, a member that is operatively connected to the second component has a magnet, and the magnet moves indirectly relative to the magnetic coil with the movement of the second component relative to the first component.

The horn switch gear according to this embodiment has only to have a structure in which the horn is activated using the induced current generated by the relative movement of the magnet and the magnetic coil. For example, the induced current may be used as the direct power supply for the horn switch to active the horn or, alternatively, as the power supply for the controller that controls the operation of the horn switch.

The horn switch gear may have a structure in which one of the first component and the second component includes the magnet and the other includes the magnetic coil. Accordingly, the magnet and the magnetic coil move relatively as the second component and the first component move relatively when the second component is depressed. The structure includes a structure in which the first component has a magnet and the second component has a magnetic coil, and a structure in which the first component has a magnetic coil and the second component has a magnet.

Accordingly, if the horn switch gear has a structure in which the relative movement of the magnet and the magnetic coil uses the relative movement of the first component and the second component, the structure is simplified and is therefore rational.

Further, the horn switch gear may be constructed such that the magnetic coil is used also as a coil spring interposed between the first component and the second component so as elastically bias the second component to separate it a specified distance apart from the first component. According to this structure, the coil spring serving as magnetic coil generates an induced current when the second component is pushed from the initial position to the operating position against the elastic biasing force of the coil spring.

Accordingly, the horn operability is improved and the appearance is enhanced. Also, the common use of the magnetic coil and the coil spring reduces the number of components, thus achieving the rationalization of the horn switch gear.

Further, the invention relates to an airbag system which includes the horn switch gear according to the invention, a steering wheel which includes the horn switch gear according to the invention, a steering wheel which includes an airbag system with a horn switch gear, wherein the airbag system is configured according to the present invention, and to a steering device having the horn switch gear according to the invention.

The airbag system preferably includes at least the horn switch gear according to the invention; a vehicle airbag; a retainer; an inflator; an airbag cover; and a horn operating member. The vehicle airbag has the function of deploying in an occupant protection region in a collision. The retainer has the function of accommodating the vehicle airbag folded in a desired form in advance. The inflator serves as gas supply means for supplying inflation gas to the vehicle airbag. The airbag cover has the function of covering the part of the vehicle airbag adjacent to the occupant. In a collision, the airbag cover is cleaved by the deploying force of the vehicle airbag, allowing the vehicle airbag to deploy in the occupant protection region. The horn operating member is operated by the occupant at the operation of the horn. In the airbag system of the invention, the horn is activated by the depression of the horn operating member serving as the second component and the operation of the horn is cancelled by releasing the depression of the horn operating member. The horn operating member typically includes a pad member, a button, and a switch.

According to the above structure, an airbag system is provided in which the horn operability and the appearance of the horn switch gear are improved.

In this airbag system, the horn operating member may be provided only to operate the horn independently from the airbag cover or, alternatively, it may be used also as the airbag cover. When the horn operating member is used also as the airbag cover, the horn operating member may operate together with the retainer side member by depression or, alternatively, may operate in isolation from the retainer side member. In other words, the horn operating member may be of a so-called cover floating (pad floating) type in which the horn operating member floats on the retainer.

The steering device includes at least a steering wheel for steering a vehicle, to which the horn switch gear according to the invention is mounted; a vehicle airbag; a retainer; an inflator; an airbag cover; and a horn operating member, which are disposed inside the outline of the steering wheel. The components of the invention, such as the vehicle airbag, the retainer, the inflator, the airbag cover, and the horn operating member, have substantially the same structure as those described above for the airbag system. In the steering device of the invention, the horn is activated by the depression of the horn operating member serving as the second component and the operation of the horn is cancelled by releasing the depression of the horn operating member.

According to this structure, there is provided a steering device in which the horn operability and the appearance of the horn switch gear are improved.

With the horn switch gear, the airbag system, the steering wheel, and the steering device according to the invention, the horn blowing signal is generated by a noncontact sensor. Accordingly, the sensor-activating member (e.g., a magnet) for causing the noncontact sensor to output the signal is fine as long as it comes close within a specified distance from the noncontact sensor or is moved relative to the noncontact sensor when the backward moving body is pushed backward. With the conventional horn switch gear using a contact rivet, the horn does not blow until the contact rivets come into contact into conduction, so that the contact rivets must come into contact with each other when the module cover etc. is pushed. In contrast, according to the invention, the sensor activating member has only to be brought close within a specified distance to the noncontact sensor or to be moved relative to the noncontact sensor, reducing the required assembly accuracy of the horn switch gear and the airbag system incorporating the same.

Since the horn switch gear employs a noncontact system, it has high durability and does not affect the operating characteristics even if slight water enters the vicinity of the horn switch. Further, the horn operability can be improved.

Although in the above description a proximity sensor having a Hall IC or a magnet and a magnetic coil is used as the noncontact sensor, the invention is not limited to that.

### [Best Mode for Carrying Out the Invention]

Embodiments of the present invention will be specifically described hereinafter with reference to the drawings.

### [Brief Description of the Drawings]

Fig. 1 is a cross-sectional view of a steering wheel with an airbag system including a horn switch gear according to an embodiment.
Fig. 2 is a cross-sectional view of the horn switch gear in Fig. 1.
Fig. 3 is a cross-sectional view of a horn switch gear according to another embodiment.
Fig. 4 is a cross-sectional view of a steering wheel with an airbag system including a horn switch gear according to still another embodiment.
Fig. 5 is a cross-sectional view of a steering device 100 according to still another embodiment.
Fig. 6 is a schematic diagram showing the operation of a magnet and a magnetic coil that constructs a horn switch gear of the embodiment of Fig. 5.
Fig. 7 is a cross-sectional view of a steering device according to still another embodiment.
Fig. 8 is a cross-sectional view of a steering device according to still another embodiment.
Fig. 9 is a cross-sectional view of a steering device according to still another embodiment.

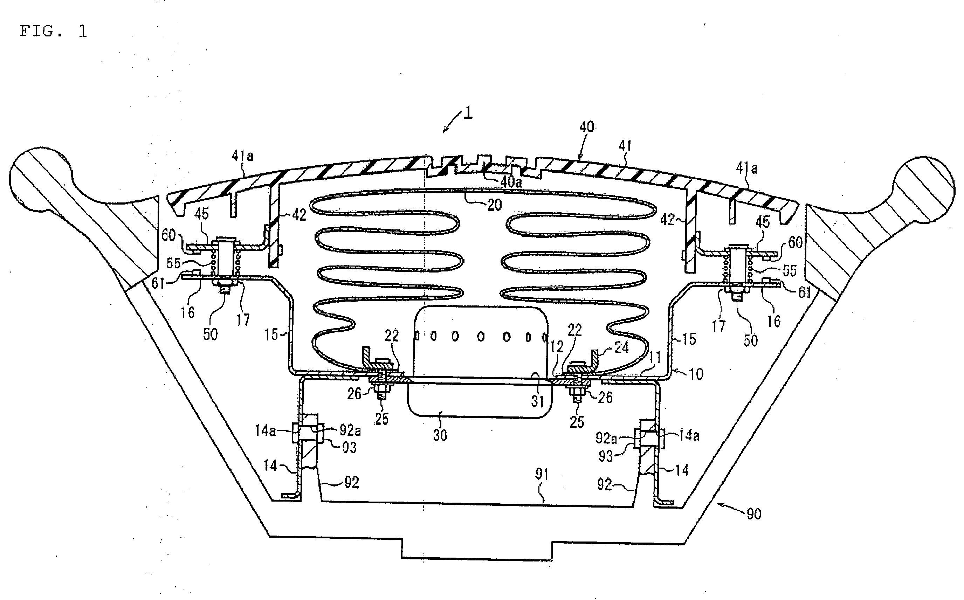

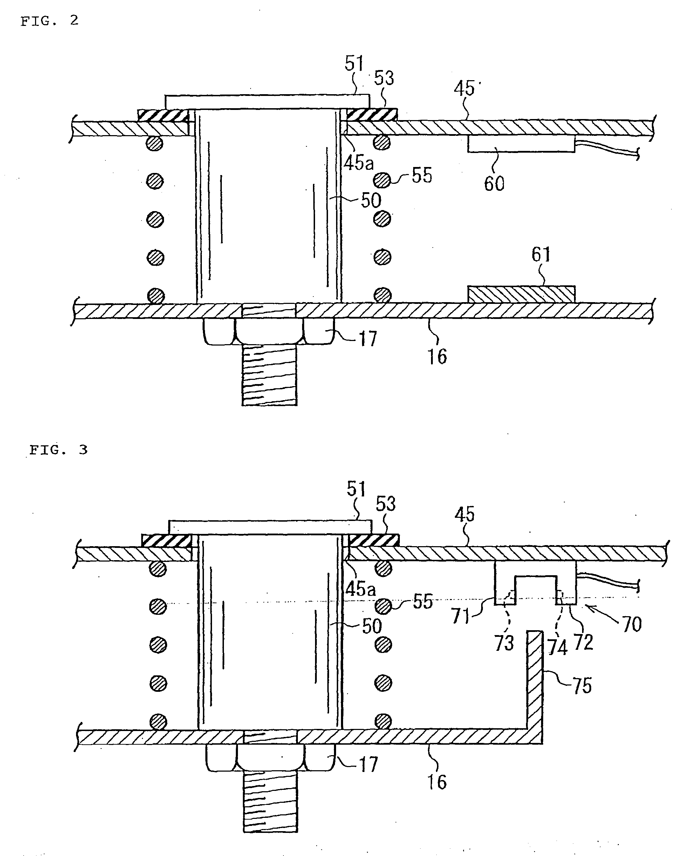

Fig. 1 is a cross-sectional view of a steering wheel with an airbag system including a horn switch gear according to an embodiment. Fig. 2 is an enlarged view of the horn switch gear in Fig. 1.

The airbag system 1 is a driver-seat airbag system disposed in the center (base 91) of a steering wheel 90. The airbag system 1 includes a metal retainer 10, an airbag 20 mounted to the retainer 10 with an airbag-fixing ring 24, an inflator 30 for inflating the airbag 20, a synthetic resin module cover 40 that covers the folded airbag 20, and a horn switch gear having a proximity sensor 60. The retainer 10 may not be made of metal but may be made of resin, magnesium alloys, etc.

The module cover 40 has a groove-like tear line 40a. When the airbag 20 is inflated by the inflator 30, the module cover 40 is cleaved along the tear line 40a.

The retainer 10 has a substantially rectangular main plate 11. The main plate 11 has an opening 12 for the inflator 30 to pass through. Around the opening 12 are provided through holes for stud bolts 25 standing from the airbag-fixing ring 24.

An anchor piece 14 stands downward in the drawing (in the direction opposite to the occupant) from the outer rim of the main plate 11 of the retainer 10. The anchor piece 14 is used to fix the airbag system 1 to the steering wheel 90. The anchor piece 14 has openings 14a for bolts etc. to pass through. An airbag mounting piece 92 stands so as to extend from the base 91 of the steering wheel 90. The mounting piece 92 also has openings 92a for bolts or rivets, etc. to pass through.

In mounting the airbag system 1 to the steering wheel 90, the anchor piece 14 is superposed on the mounting piece 92, and then the bolts or rivets 93, etc. are passed through the openings 14a, 92a to connect the anchor piece 14 and the mounting piece 92. The openings 14a, 92a may be a bolt screw holes.

An enclosure 15 stands upward in Fig. 1 (toward the occupant) from the outer rim of the main plate 11 of the retainer 10. An extension 16 extends laterally (to the side of the airbag system 1) from the end of the enclosure 15 in the standing direction.

To the extension 16 are fixed nuts 17 for fixing guide shafts 50.

The airbag 20 has a structure in which the periphery of an inflator insertion hole 22 thereof is placed on the periphery of the inflator opening 12 of the retainer main plate 11, on which the airbag-fixing ring 24 is placed. The stud bolts 25 are passed through the bolt insertion holes provided around the inflator insertion hole 22. Each stud bolt 25 is then passed through a bolt insertion hole 13 of the retainer 10. The stud bolt 25 is then passed through a bolt insertion hole 32 of a flange 31 of the inflator 30, on which a nut 26 is tightened. The airbag 20 and the inflator 30 are thus fixed to the retainer 10.

The module cover 40 has a main surface 41 that faces the occupant and a leg 42 extending from the back of the main surface 41. The leg 42 is molded integrally with the main surface 41 by injection molding of synthetic resin and has a substantially rectangular frame shape as with the enclosure 15 of the retainer 10. The periphery 41a of the main surface 41 overhangs outward from the leg 42.

An overhang 45 is fixed to the leg 42 with a fixing member such as a rivet 46. The overhang 45 extends outward to the side orthogonal to the forward and backward moving direction (vertically in Figs. 1 and 2) of the module cover 40. The overhang 45 has openings 45a at the end in the extending direction, through which the guide shafts 50 are passed.

The lower end of each guide shaft 50 is screwed into the nut 17 of the extension 16 to be fixed to the extension 16 and stands from the extension 16 toward the occupant. A flange 51 is provided as stopper at the upper rim of the guide shaft 50. Between the flange 51 and the overhang 45 is interposed a cushioning washer 53 made of rubber or the like.

A coil spring 55 is provided around the guide shaft 50 to push the ends of the overhang 45 and the extension 16 in the direction in which they are separated from each other.

A magnetosensitive proximity sensor 60 including a Hall IC is mounted to the lower surface of the overhang 45. The Hall IC is an integrated circuit in which a Hall element serving as magnetosensitive element is assembled in the circuit.

A magnet 61 is mounted to the position of the upper surface of the extension 16 which faces the overhang 45.

The proximity sensor 60 and the magnet 61 construct a horn switch.

The horn blowing operation of the airbag system with this horn switch will be described.

Without the module cover 40 depressed, the coil spring 55 pushes the overhang 45 to the flange 51. In this state, the proximity sensor 60 is sufficiently apart from the magnet 61, generating no voltage in the Hall IC.

When the module cover 40 is pushed, the overhang 45 is moved downward together with the module cover 40 to move the sensor 60 close to the magnet 61. The extension 16 is integral with the retainer 10 and the retainer 10 is fixed to a steering wheel (not shown). Accordingly, even when the module cover 40 is pushed, the extension 16 does not move backward.

When the distance between the sensor 60 and the magnet 61 becomes shorter than a specified distance, the Hall IC generates a voltage higher than a threshold owing to the magnetic flux from the magnet 61, so that the sensor 60 generates a horn blowing signal. In response to the signal, a horn operating circuit (not shown) energizes the horn to blow the horn. The horn operating circuit may either be assembled in the proximity sensor 60 or be provided separately.

On release from the module cover 40, the overhang 45 is pushed up into contact with the flange 51 by the pressure of the coil spring 55 to return the module cover 40 to the normal position shown in Fig. 1. When the overhang 45 moves upward to bring the intensity of the magnetic field of the magnet 61 to the proximity sensor 60 to a level lower than a specified value, the output of the horn blowing signal from the proximity sensor 60 is stopped to stop the blow of the horn.

According to the embodiment, the distance between the proximity sensor 60 and the magnet 61 is uniquely defined by the dimension of the guide shaft 50. Accordingly, even if the accuracy of the lateral position of the sensor 60 and the magnet 61 is not high, the horn blows reliably when the module cover 40 is depressed by more than a specified amount. This moderates the accuracy required for the position of the sensor 60 and the magnet 61 on the extension 16, improving the efficiency of the assembling work for the airbag system.

Since the sensor 60 is of a noncontact type, it has high durability, and even if water enters between the sensor 60 and the magnet 61, the horn switch operation is not affected.

This embodiment is constructed such that the overhang 45 is disposed above the extension 16. Accordingly, they come close to each other when the module cover 40 is depressed. Alternatively, it may be constructed such that the overhang 45 is disposed below the extension 16 so that they come apart from each other when the module cover 40 is depressed. In this case, when the module cover 40 is depressed to some extent, the output of the signal from the sensor 60 is stopped. In response to that, the horn is blown.

Fig. 3 is a cross-sectional view of an airbag system including a horn switch according to another embodiment, showing the same part as that of Fig. 2.

This embodiment uses an optical sensor as a proximity sensor 70. The sensor 70 includes a pair of opposing wall-like bases 71 and 72, a light-emitting element 73 disposed on the opposing face of the wall-like base 71, and a light-receiving element 74 disposed on the opposing face of the wall-like base 72. The extension 16 has an upstanding wall 75 that enters between the wall-like bases 71 and 72. The light-emitting element 73 lights on continuously while the key of the car is in ON-position. The light from the light-emitting element 73 is received by the light-receiving element 74. The light-reception signal from the light-receiving element 74 is inputted to a horn operating circuit (not shown). When the light reception signal is at H, the horn operating circuit does not blow the horn; when the light reception signal is at L, it blows the horn.

The other structures are the same as those of the foregoing embodiment, so that the same reference numerals indicate the same components.

In the airbag system with the horn switch of Fig. 3, the upstanding wall 75 does not enter between the wall-like bases 71 and 72 with the module cover 40 not depressed, so that the signal level of the light-receiving element 74 is at H, so that the horn does not blow; when the module cover 40 is depressed to some extent to move the upstanding wall 75 between the elements 73 and 74, the light from the light-emitting element 73 to the light-receiving element 74 is blocked to bring the signal level of the light-receiving element 74 to L, so that the horn blows.

Also in this embodiment, the distance between the overhang 45 and the extension 16 is uniquely defined by the guide shaft 50 to easily keep the height of the upstanding wall 75 constant with high accuracy. The sensor 70 has only to be fixed to the overhang 45 so that the overhang 45 enters between the wall-like bases 71 and 72 when the module cover 40 is depressed, whose positioning accuracy on the overhang 45 can be low. This improves the efficiency of the assembling work of an airbag system.

The sensor 70 is also of a noncontact type, thus having high durability and having resistance to water intruding into the vicinity of the sensor 70.

This embodiment may also be constructed such that the overhang 45 is disposed below the extension 16, so that when the module cover 40 is depressed, the overhang 45 is separated from the extension 16. This embodiment is constructed such that, on pushing the module cover more than a specified stroke, the upstanding wall 75 is separated from between the elements 73 and 74 to blow the horn.

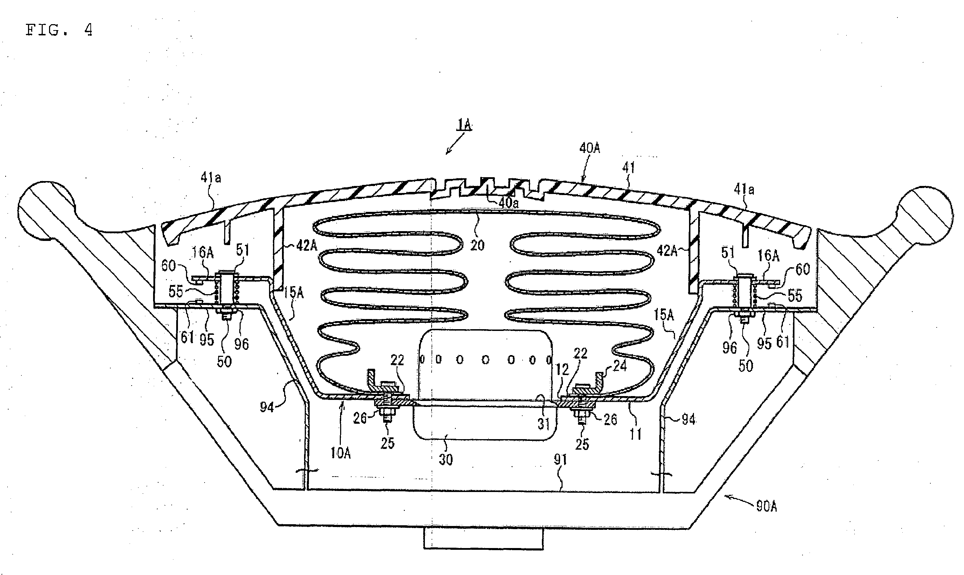

The above embodiments are constructed such that the module cover moves backward to turn on the horn switch. Alternatively, the entire airbag system may be moved backward to turn on the horn switch. Fig. 4 is a cross-sectional view of a steering wheel with an airbag system with such a structure.

The airbag system 1A also includes a retainer 10A, the airbag 20 mounted to the retainer 10A with the airbag-fixing ring 24, the inflator 30 for inflating the airbag 20, a module cover 40A that covers the folded airbag 20, and a horn switch gear having the proximity sensor 60.

The retainer 10A of this embodiment also has the substantially rectangular main plate 11, to which the airbag 20 and the inflator 30 are mounted. The mounting structure is the same as that of the airbag system 1 of Fig. 1.

An enclosure 15A stands upward in the Fig. 4 (toward the occupant) from the outer rim of the main plate 11 of the retainer 10A. Extensions 16A extend laterally (to the side of the airbag system 1A and in the direction orthogonal to the forward and backward moving direction of the airbag system 1A (vertically in Fig. 4), the same also applies to the following) from the end of the enclosure 15A in the standing direction.

The module cover 40A has the main surface 41 that faces the occupant and a leg 42A extending from the back of the main surface 41 downward in Fig. 4 (in the opposite direction to the occupant) along the inside wall of the enclosure 15A. The leg 42A is fixed to the enclosure 15A with a fixing member such as a rivet (not shown).

In this embodiment, airbag-system supporting pieces 94 stand from a base 91 of a steering wheel 90A along the outside wall of the enclosure 15A. The supporting pieces 94 are provided as many as the extensions 16A, which are disposed such that the respective ends face the extensions 16A from below. At the end of each supporting piece 94 is provided a facing part 95 that extends to the side of the airbag system 1A (in parallel with the direction in which the extension 16A extends) and faces the lower surface of the extension 16A. In this embodiment, a nut 96 for fixing the guide-shaft 50 is fixed to the facing part 95.

In this embodiment, the extension 16A has an opening (its reference numeral is omitted), through which the guide shaft 50 is passed. The lower end of the guide shaft 50 is screwed into the nut 96 on the facing part 95 to be fixed to the facing part 95 and stands upward from the facing part 95. Also in this embodiment, the flange 51 is provided as stopper at the upper rim of the guide shaft 50. Between the flange 51 and the extension 16A is interposed a cushioning washer (its reference numeral is omitted) made of rubber or the like.

Around the guide shaft 50 is provided the coil spring 55 that pushes the ends of the extension 16A and the facing part 81 in the separating direction.

The entire airbag system 1A is supported by the supporting pieces 94 (steering wheel 90A) so as to move forward and backward along the guide shafts 50 via the guide shaft 50 and the coil springs 55.

In this embodiment, the magnetosensitive proximity sensor 60 having a Hall IC is mounted to the lower surface of the extension 16A; the magnet 61 is mounted on the upper surface of the facing part 95. Briefly, in this embodiment, the proximity sensor 60 and the magnet 61 construct a horn switch. Conversely, the proximity sensor 60 may be mounted on the upper surface of the facing part 95; the magnet 61 may be mounted on the lower surface of the extension 16A.

The other structures of the airbag system 1A and the horn switch are the same as those of the embodiment of Figs. 1 and 2. The numerals of Fig. 4 the same as those of Figs. 1 and 2 indicate the same components.

The horn blowing operation of the airbag system with this horn switch will be described.

Without the module cover 40A depressed, the coil spring 55 pushes the extension 16A to the flange 51. In this state, the proximity sensor 60 is sufficiently apart from the magnet 61, generating no voltage in the Hall IC.

When the module cover 40A is depressed, the entire airbag system 1A is moved downward along the guide shafts 50. The facing parts 95 (supporting pieces 94) are integral with the steering wheel 90A, so that, even when the module cover 40A is depressed, the facing part 95 is not moved backward. Accordingly, the extension 16A moves toward the facing part 95 to bring the sensor 60 close to the magnet 61.

When the distance between the sensor 60 and the magnet 61 becomes shorter than a specified distance, the Hall IC generates a voltage higher than a threshold owing to the magnetic flux from the magnet 61, so that the sensor 60 generates a horn blowing signal. In response to the signal, a horn operating circuit (not shown) energizes the horn to blow the horn.

On release from the module cover 40A, the extension 16A is pushed up into contact with the flange 51 by the pressure of the coil spring 55 to return the entire airbag system 1A to the normal position shown in Fig. 4. When the extension 16A moves upward to bring the intensity of the magnetic field of the magnet 61 to the proximity sensor 60 to a level lower than a specified value, the output of the horn blowing signal from the proximity sensor 60 is stopped to stop the blow of the horn.

This embodiment is constructed such that the facing parts 95 are disposed below the extension 16A to support the airbag system 1A from below. Accordingly, they come close to each other when the module cover 40A is depressed. Alternatively, it may be constructed such that the facing parts 95 are disposed above the extension 16A and the airbag system 1A is hung from the facing parts 95 so that they come apart from each other when the module cover 40A is depressed. In this case, when the module cover 40A is depressed to some extent, the output of the signal from the sensor 60 is stopped. In response to that, the horn is blown.

This embodiment uses, as a horn switch, the magnetosensitive proximity sensor 60 having a Hall IC and the magnet 61. Alternatively, it may be constructed of the light-emitting element 73 and the light-receiving element 74, as in Fig. 3.

The above-described embodiments are merely examples of the invention and other structures other than those illustrated can be made. For example, other magnetosensitive horn switches such as a lead switch may be used.

The horn switch gear may be constructed such that the distance between the overhang 45 and the extension 16 or the distance between the extension 16A and the facing part 81 is measured with light or ultrasonic waves and when the distance exceeds a specified value, the horn is blown.

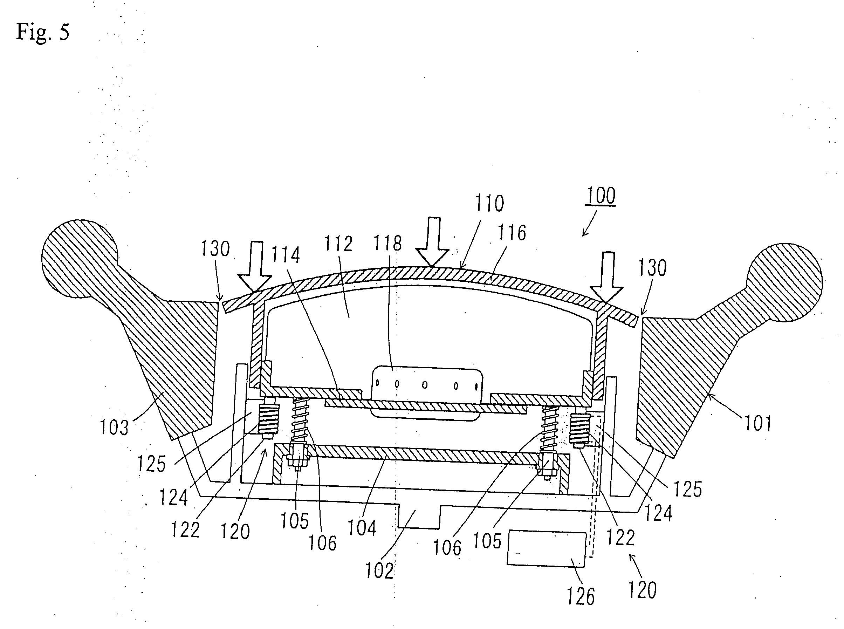

Referring to Fig. 5, a steering device 100 for cars according to a further embodiment of the invention will be described. To the steering device 100 of the embodiment, a horn switch gear 120 is mounted.

Fig. 5 is a cross section of the steering device 100 of this embodiment.

As shown in Fig. 5, the steering device 100 includes a ring-shaped steering wheel 101 for an occupant to use for steering a vehicle. The steering wheel 101 is constructed such that a ring-shaped metal core 102 is coated with urethane resin 103. The steering wheel 101 corresponds to a steering wheel for steering a vehicle. An airbag module 110 is disposed inside the outline of the steering wheel 101. Under the airbag module 110, a horn switch gear 120 is mounted.

The airbag module 110 according to the embodiment includes an airbag 112 that inflates toward an occupant protection region in a collision, a metal retainer 114 that accommodates the vehicle airbag 112 folded in a desired form in advance, a resin module cover (module pad) 116 that covers the side of the airbag 112 adjacent to the occupant, and an inflator 118 that can supply inflation gas to the airbag 112.

The airbag 112 is a member that operates in such a way that, when the inflator 118 is activated in a collision to supply inflation gas to the airbag 112, it deploys in an occupant protection region while cleaving the module cover 116 along a tear line (not shown).

The module cover 116 is a member that controls a horn switch 126 (described later) to "ON state," or to activate (blow) a horn when depressed and, to "OFF state," or to cancel the operation of the horn when the depression is released, which serves as "a second component". The module cover 116 corresponds to an airbag cover.

The airbag module 110 of the embodiment is prepared as "a preassembled body" in which the module cover 116 is preassembled to the retainer 114 before the airbag module 110 is assembled to the steering wheel 101. The airbag module 110 is fixed via guide bolts 105 and coil springs 106. The guide bolts 105 are disposed between the retainer 114 of the airbag module 110 and a bracket 104 fixed to the metal core 102, and locate the retainer 114 to the bracket 104. Each coil spring 106 is disposed around the guide bolt 105, and has the function of applying elastic biasing force in the direction in which the retainer 114 and the bracket 104 separate from each other. In other words, the coil spring 106 is means for elastically biasing the module cover 116 of the airbag module 110 toward the initial position.

The horn switch gear 120 of the embodiment principally includes a magnet 122, a magnetic coil 124, and a horn switch 126.

The magnet 122 is fixed to the lower surface of the retainer 114 which is moved when the module cover 116 is depressed, and constructed as a longitudinal permanent magnet extending downward from the lower surface.

The magnetic coil 124 is fixed to the metal core 102 (which corresponds to "a first component") which is fixed when the module cover 116 is depressed via an insulator 125, and has a coil structure in which a lead wire is wound in a spiral or ring shape. The magnet 122 is fitted in the magnetic coil 124.

The horn switch 126, whose specific position is not shown, is electrically connected to the magnetic coil 124 and serves as a switch to blow (output) a horn (Klaxon) by passing a predetermined current in a specified direction of the magnetic coil 124. In other words, according to the embodiment, the current flowing in the magnetic coil 124 serves as direct power supply to activate the horn switch 126.

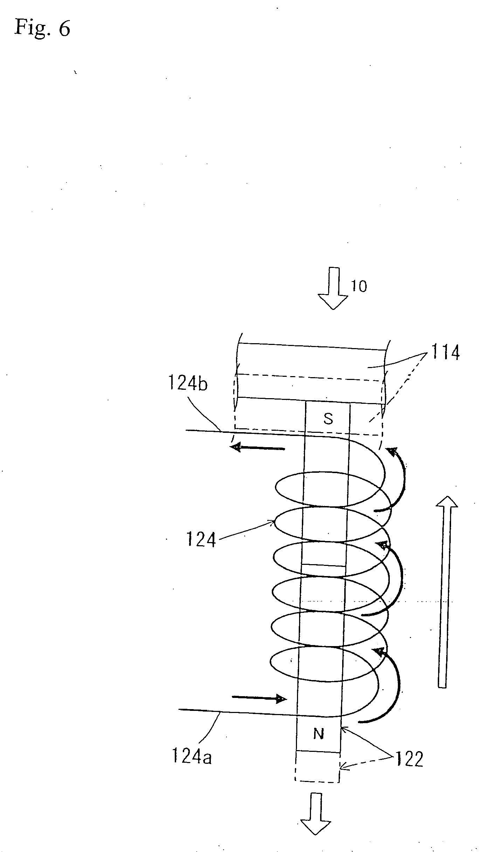

The operation of this horn switch gear 120 will be described with reference to Figs. 5 and 6. Fig. 6 schematically shows the operation of the magnet 122 and the magnetic coil 124 that construct the horn switch gear 120 of the embodiment.

When the module cover (the module cover 116 in Fig. 5) of the airbag module 110 is depressed from the initial position to the operating position by the occupant, the magnet 122 fixed to the moving-side retainer 114 is moved in the direction of arrow 10 in Fig. 6 while being fitted in the magnetic coil 124. At that time, when the retainer 114 moves from the initial position designated by the solid line to the operating position indicated by the phantom line in Fig. 6, the magnet 122 also moves from the position indicated by the solid line to the position indicated by the phantom line in the same way as that of the retainer 114 (the same moving direction and stroke). The magnet 122 is a moving member that can move relative to the magnetic coil 124 that is a fixed member fixed to the metal core 102 of the steering wheel 101. The movement of the magnet 122 causes the magnetic coil 124 to generate induced electromotive force, passing an induced current through the magnetic coil 124. The induced electromotive force is generated in the magnetic coil 124 in the direction in which the magnetic field due to the induced current prevents a change in the original magnetic field. The phenomenon is based on the principle of so-called "electromagnetic induction."

This embodiment is constructed such that when the airbag module 110 is moved downward (downward in Fig. 5) against the elastic biasing force of the coil springs 106 by the depression of the module cover 116 to move the magnet 122 downward, whose lower side is an N-pole and upper side is S-pole, as shown in Fig. 6, a specified induced current flows from one end 124a of the magnetic coil 124 to the other end 124b. Since the specified current flows in this direction, the horn switch 126 electrically connected to the magnetic coil 124 senses the induced current to be turned into "ON-state," blowing the horn. On the other hand, when the depression of the module cover 116 is cancelled to move the magnet 122 upward in the magnetic coil 124, then an opposite induced current flows from the other end 124b of the magnetic coil 124 to the end 124a, so that the horn switch 126 senses no specified induced current to be turned into "OFF-state," thus stopping the blow of the horn.

In this embodiment, the magnetic force (magnetic flux density) of the magnet 122, the diameter and the number of windings of the magnetic coil 124, the pressure required for the occupant to depress the module cover 116 to the operating position to activate the horn (the elastic biasing force of the coil springs 106 to elastically bias the module cover 116 to the initial position), the operation stroke of the module cover 116, and so forth can be set so that the magnetic coil 124 can pass a current higher than a specified induced current at the depression of the module cover 116. This allows the magnetic coil 124 to pass through a current higher than a specific induced current while reducing the pressure and operation stroke required to depress the module cover 116 by adjusting the magnetic force (magnetic flux density) of the magnet 122, and the diameter and the number of windings of the magnetic coil 124.

As has been described, with the steering device 100 according to the embodiment, the horn operability of the horn switch gear 120 can be increased by reducing the pressure and operation stroke required to depress the module cover 116. Also, the gap (or clearance) formed between the steering wheel 101 and the outer periphery of the module cover 116, specifically, the gap 130 in Fig. 5, can be minimized by reducing the operation stroke of the module cover 116, enhancing the appearance.

In the foregoing embodiment various applications and modifications can be made. For example, the following applications can be made.

In the steering device 100 of the above embodiment, the horn switch gear 120 is constructed such that multiple sets of the magnet 122 and the magnetic coil 124 and multiple coil springs 106 are disposed around the lower outer periphery of the retainer 114. However, the mounting position and the set number of the magnets 122, the magnetic coils 124, and the coil springs 106 are not limited. The mounting positions of the magnets 122, the magnetic coils 124, and the coil springs 106 have only to be within the region partitioned by the steering wheel 101 and the module cover 116 and can be varied depending on the specifications of the steering device. With a structure in which the magnet 122 and the magnetic coil 124 can move relatively as the module cover 116 is depressed, the magnet 122 and the magnetic coil 124 can be disposed on the various components disposed in the region partitioned by the steering wheel 101 and the module cover 116.

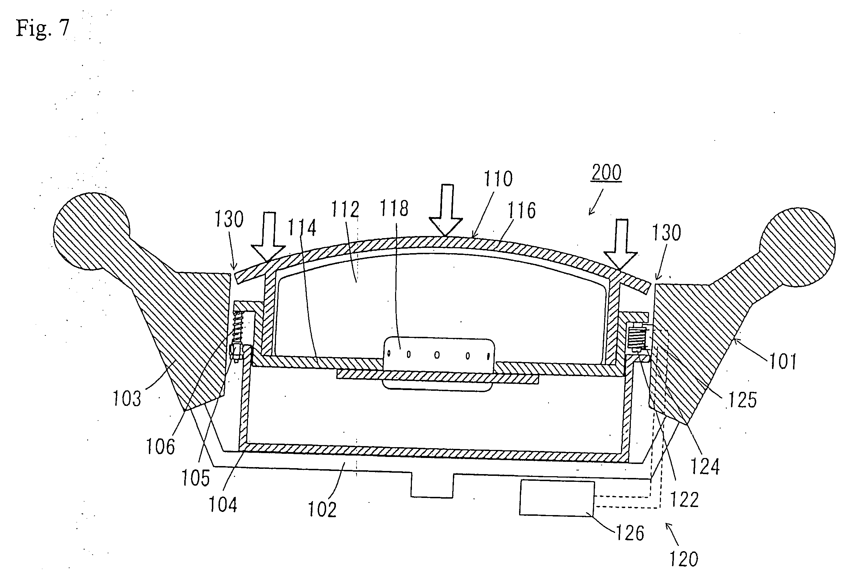

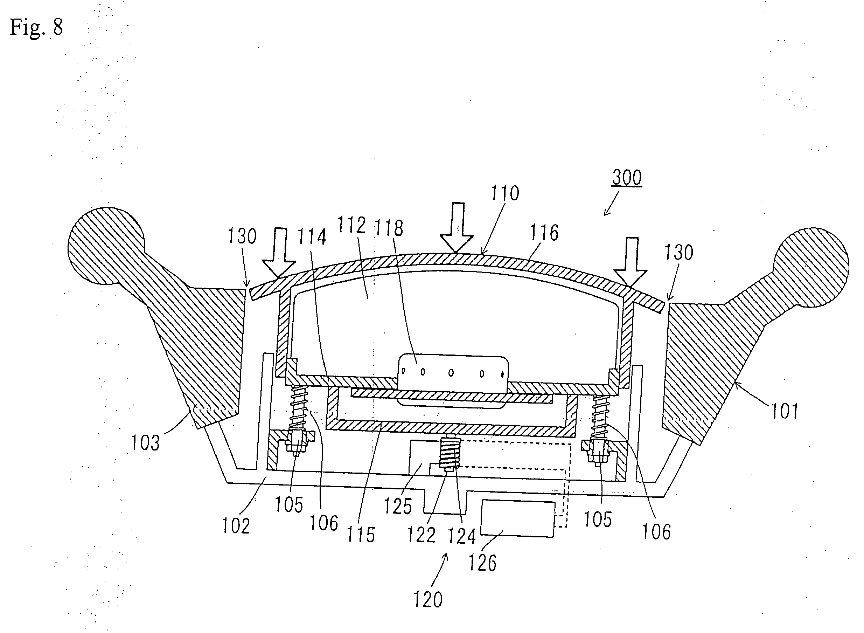

Referring now to Figs. 7 and 8, further embodiments of the mounting positions of the magnet 122, the magnetic coil 124, and the coil spring 106 will be described. In Figs. 7 and 8, the same components as those of Fig. 5 are given the same reference numerals and their detailed description will be omitted.

In a steering device 200 shown in Fig. 7, the horn switch gear 120 is constructed such that the magnet 122 fixed to the retainer 114, the magnetic coil 124 fixed to the steering wheel 101, and the coil spring 106 interposed between the retainer 114 and the bracket 104 are disposed on the side of the retainer 114. In a steering device 300 shown in Fig. 8, the magnet 122 fixed to a bracket 115 of the retainer 114, and the magnetic coil 124 fixed to the metal core 102 are disposed in the lower center of the retainer 114, and the coil springs 106 are disposed at the lower outer periphery of the retainer 114. With such mounting structures of the steering devices 200 and 300, the horn operability and the appearance can be improved, as with the steering device 100.

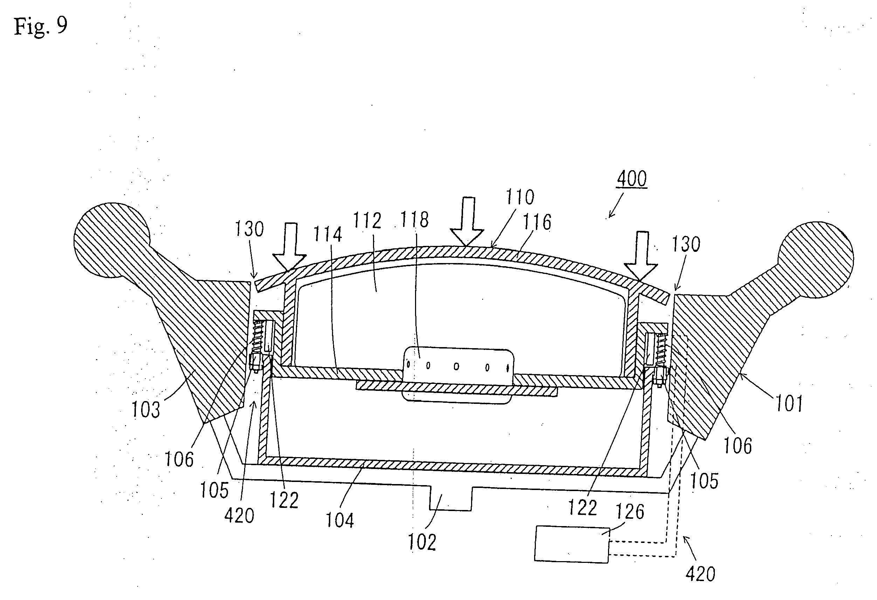

In the steering device 100 of Fig. 5, the steering device 200 shown in Fig. 7, and the steering device 300 shown in Fig. 8, the magnetic coil 124 and the coil spring 106 are separated from each other. However, the invention may be constructed such that the magnetic coil 124 and the coil spring 106 are be used in common. This embodiment will be described with reference to Fig. 9. In Fig. 9, the same components as those of Fig. 5 are given the same reference numerals and their detailed description will be omitted.

A horn switch gear 420 of a steering device 400 shown in Fig. 9 is constructed such that the coil springs 106 disposed on the sides of the retainer 114 has the function of the magnetic coil 124 in addition to the original function of elastically biasing the airbag module 110 to the initial position. Specifically speaking, since the magnets 122 fixed to the retainer 114 and the coil springs 106 interposed between the retainer 114 and the bracket 104 are moved relatively when the module cover 116 is depressed, a specified induced current is generated in the coil springs 106. The horn switch 126 senses the induced current to be turned into "ON-state" to blow the horn. With such a structure of the steering device 400, the horn operability and the appearance can be improved, as with the steering device 100. Also, the number of components can be reduced by using the coil springs 106 and the magnetic coil 124 in common, allowing the rationalization of the horn switch gear 420.

In the foregoing embodiments according to Figs. 5-9, the magnet 122 is disposed to the retainer 114 that is on the movable side when the module cover 116 is depressed, while the magnetic coil 124 is disposed to the metal core 102 that is on the fixed side. Alternatively, a structure may be used in which the magnetic coil 124 is disposed to moving-side retainer 114, while the magnet 122 is disposed to the fixed-side metal core 102. In short, it is only necessary to have a structure in which the magnet 122 and the magnetic coil 124 move relatively.

Although in the above embodiments the module cover 116 of the airbag module 110 and the retainer 114 move integrally when the module cover 116 is depressed, it is possible to have a structure in which the module cover 116 moves in isolation from the retainer 114 at depression, that is, a so-called cover floating (pad floating) type in which the module cover 116 floats on the retainer 140. With this structure, for example, the magnet 122 can be disposed to the moving-side module cover 116, and the magnetic coil 124 may be disposed to the fixed-side metal core 102.

Although in the above embodiments the horn is activated by the depression of the module cover 116 that covers the occupant side of the airbag 112, the above-described concept can be applied to an airbag system and a steering device that include a horn operating member such as a horn operating cover used only to activate the horn and a horn operating button (switch). With such a structure, for example, the magnet 122 may be disposed to the horn operating member on the moving side, and the magnetic coil 124 may be disposed to the metal core 102 on the fixed side.

In the horn switch gear of the above embodiments, the induced current generated by the relative movement of the magnet 122 and the magnetic coil 124 serves as direct power supply for the horn switch 126 to activate the horn. Alternatively, the induced current may be used as power supply for a controller (ECU etc.) for controlling the operation of the horn switch 126 etc.

Although in the above embodiments the structure of the steering device of a car has been described, the described technique is applicable to the structure of the steering device of vehicles other than a car, for example, vessels and trains.

## Claims

1. A horn switch gear comprising:
a backward moving body (1A; 40A; 116) that is moved backward by the depression by an occupant;
an unmoving body (10; 94; 102) that faces the backward moving body (1A; 40A; 116);
a biasing member (55; 106; 124) interposed between the backward moving body (1A; 40A; 116) and the unmoving body (10; 94; 102) and biases the backward moving body (1A; 40A; 116) in the restoring direction; and
signal generation means (60; 61; 70; 75; 122; 124) that generates a horn blowing signal by the forward and backward movement of the backward moving body (1A; 40A; 116), wherein
the signal generation means includes a noncontact sensor (60; 70; 122; 124).

2. The horn switch gear according to Claim 1, wherein the noncontact sensor (60) includes a Hall IC.

3. A horn switch gear according to claim 1, wherein the horn switch gear is provided on a steering wheel (101) for vehicles, wherein the backward moving body (116) is biased so as to be separated by a specified distance from the unmoving body (102) which is provided on the steering-wheel side and is configured to be moved to an operating position by depression against the biasing force of the biasing member (106; 124) to blow a horn, and wherein the operation of the horn is cancelled by releasing the depression, the signal generation means (122; 124) comprising:
a magnet (122) and a magnetic coil (124) that move relatively when the backward moving body (116) moves toward the operating position while moving relative to the unmoving body (102), wherein the signal generation means (122, 124) is configured in such a manner that, when the backward moving body (116) moves toward the operating position, the magnet (122) and the magnetic coil (124) move relatively to generate an induced current in the magnetic coil (124), thereby operating the horn by the generation of the induced current.

4. The horn switch gear according to Claim 3, wherein
one of the backward moving body (116) and the unmoving body (102) includes the magnet (122), and the other includes the magnetic coil (124).

5. The horn switch gear according to Claim 3 or 4, wherein
the magnetic coil (124) is used also as the biasing member interposed between the unmoving body (102) and the backward moving body (116) so as to elastically bias the backward moving body (116) a specified distance apart from the unmoving body (102).

6. An airbag system including a horn switch gear, wherein the horn switch gear is configured according to any one of Claims 1 to 5.

7. The airbag system according to Claim 6, further comprising:
a vehicle airbag (20; 112) that deploys in an occupant protection region in a collision;
a retainer (10; 10A; 114) that accommodates the vehicle airbag (20; 112) folded in a desired form in advance;
an inflator (30; 118) that supplies inflation gas to the vehicle airbag (20; 112);
an airbag cover (40; 40A; 116) that covers the part of the vehicle airbag (20; 112) adjacent to the occupant; and
a horn operating member,
wherein a horn is activated by the depression of the horn operating member serving as the backward moving body and the operation of the horn is cancelled by releasing the depression of the horn operating member.

8. A steering wheel (90; 90A; 101) including a horn switch gear, wherein the horn switch gear is configured according to any one of Claims 1 to 5.

9. A steering wheel (90; 90A; 101) including an airbag system with a horn switch gear, wherein the airbag system is configured according to Claim 6 or 7.

10. A steering device comprising:
a steering wheel (90; 90A; 101) for steering a vehicle, to which the horn switch gear according to one of Claims 1 to 5 is mounted;
a vehicle airbag (20; 112) that deploys in an occupant protection region in a collision;
a retainer (10; 10A, 114) that accommodates the vehicle airbag (20; 112) folded in a desired form in advance;
an inflator (30; 118) that supplies inflation gas to the vehicle airbag (20; 112);
an airbag cover (40; 40A; 116) that covers the part of the vehicle airbag (20; 112) adjacent to the occupant inside the outline of the steering wheel (90; 90A; 101); and
a horn operating member provided to the steering wheel (90, 90A; 101),
wherein a horn is activated by the depression of the horn operating member serving as the backward moving member and the operation of the horn is cancelled by releasing the depression of the horn operating member.
